(19) **Europäisches Patentamt / European Patent Office / Office européen des brevets**

(11) **EP 1 601 095 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
*H02P 6/22* *(2006.01)*

(21) Anmeldenummer: **05009657.7**

(22) Anmeldetag: **03.05.2005**

(54) **Elektronisch kommutierter zweipulsiger Motor und Verfahren zum Starten eines solchen Motors**

Electronically commutated two-pulse motor and method for starting such a motor

Moteur à commutation électronique à double impulsion et procédé pour le démarrage d'un tel moteur

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **12.05.2004 DE 102004024638**

(43) Veröffentlichungstag der Anmeldung:
**30.11.2005 Patentblatt 2005/48**

(73) Patentinhaber: **ebm-papst St. Georgen GmbH & Co. KG**
**78112 St. Georgen (DE)**

(72) Erfinder: **Dornhof, Konstantin**
**78194 Immendingen (DE)**

(74) Vertreter: **Raible, Tobias**
**Raible & Raible**
**Schoderstrasse 10**
**70192 Stuttgart (DE)**

(56) Entgegenhaltungen:
**EP-A- 1 104 950    EP-A- 1 213 829**
**DE-A1- 2 346 380    DE-A1- 4 438 569**
**DE-A1- 10 235 293**

**Beschreibung**

Die Erfindung betrifft einen elektronisch kommutierten zweipulsigen Motor, und sie betrifft ein Startverfahren für einen derartigen Motor. Ein solcher Motor wird durch ein in den Motor hinein konstruiertes Reluktanzmoment vor dem Start in eine definierte Ruhelage gedreht, wie das z.B. bei Lüftern der Fall ist, welche von solchen Motoren angetrieben werden.

Derartige Motoren verwenden gewöhnlich einen Rotorstellungssensor, meist einen Hallsensor, um einen Start in der gewünschten Drehrichtung sicher zu stellen. Ein solcher Motor ist bekannt aus der DE-A1-102 35 293. Ein Hallsensor muss mechanisch exakt platziert werden, was besonders bei kleinen Motoren schwierig ist. Auch ist die zulässige Höchsttemperatur eines Hallsensors begrenzt, und seine Anwendung in einer aggressiven Atmosphäre kann Probleme verursachen. Ferner wird oft verlangt, dass die Elektronik einen Abstand vom Motor hat, z.B. bei Anwendungen in einer Umgebung, wo ein Explosionsschutz nötig ist.

In solchen Fällen arbeitet man deshalb mit dem so genannten Sensorless-Prinzip, um einen sicheren Start des Motors in der gewünschten Drehrichtung zu ermöglichen, d.h. man arbeitet ohne Rotorstellungssensor. Ist der Motor einmal gestartet, so stellt der weitere Lauf in der gewünschten Drehrichtung gewöhnlich kein Problem mehr dar.

Bei einer solchen Anordnung muss sichergestellt sein, dass der Motor in der richtigen Drehrichtung startet, obwohl ihm eindeutige Drehstellungsinformationen von einem Hallsensor fehlen.

Dabei macht man von einer besondere Eigenschaft solcher Motoren Gebrauch, wie sie an sich bekannt und in der DE 23 46 380 A dargestellt sind. Solche Motoren arbeiten mit einem drehstellungsabhängigen Hilfsmoment, nämlich mit einem sogenannten Reluktanzmoment.
Dieses ist unsymmetrisch und ist so ausgelegt, dass der Start des Motors in einer sogenannten Vorzugsrichtung problemlos ist, während der Start in der Gegenrichtung schwierig ist.

Aus der DE-A1-4 438 569 ist ein Startverfahren für einen elektronisch kommutierten Motor bekannt, der ohne Rotorstellungssensor arbeitet.

Beim Start wird einem Strang der Statorwicklung während einer konstanten Zeitspanne ein Stromimpuls zugeführt. Je nach der Drehstellung des Rotors beim Start bewirkt dieser Stromimpuls keinen Anlauf, oder er bewirkt einen Anlauf des Motors. Im letzteren Fall wird vom sich drehenden Rotor in der Statorwicklung eine Spannung induziert, die einen bestimmten Schwellwert überschreitet, und diese induzierte Spannung wird in den sogenannten Austastlücken erfasst und zeigt an, dass sich der Motor dreht, jedoch nicht die Richtung dieser Drehung.

Sofern der Stromimpuls konstanter Zeitdauer keinen Anlauf bewirkt, wird vom Rotor in der Statorwicklung keine Spannung induziert, die den genannten Schwellwert überschreitet, und dies zeigt an, dass sich der Motor nicht dreht. In diesem Fall wird nach einer kurzen Pause einem anderen Strang der Statorwicklung ebenfalls ein Stromimpuls konstanter Zeitdauer zugeführt, und es wird erneut überwacht, ob in der Statorwicklung eine Spannung induziert wird, die einen bestimmten Schwellwert überschreitet und dadurch anzeigt, dass sich der Motor dreht. Jedoch wird hierbei nicht sicher gestellt, dass sich der Motor in einer gewünschten Drehrichtung dreht.

Aus der EP-A2-1 104 950 kennt man einen Lüfter, der von einem elektronisch kommutierten Motor angetrieben wird. Bei diesem Motor wird am Stator ein Magnetring verwendet, der den Rotor vor dem Start in eine gewünschte Startstellung zieht. Bei diesem Lüfter hat das Lüfterrad einen symmetrischen Aufbau, so dass es keine Rolle spielt, ob sich der Rotor in der einen oder der anderen Richtung dreht.

Schließlich kennt man aus der EP-A1-1 213 829 einen elektronisch kommutierten Motor, der mit Steuerung durch einen Hallsensor arbeitet. Das Signal dieses Sensors wird durch ein Ersatzsignal ersetzt, wodurch eine sogenannte Zündwinkelverschiebung ermöglicht wird.

Es ist eine Aufgabe der Erfindung, ein neues Startverfahren und einen entsprechenden elektronisch kommutierten Motor bereit zu stellen.

Nach der Erfindung wird diese Aufgabe gelöst durch den Gegenstand des Anspruchs 1, ebenso durch den Gegenstand des Anspruchs 6. Dadurch, dass man die elektrische Energiezufuhr zum Motor beim Start auf einen vorgegebenen Wert begrenzt, erreicht man, dass dieser im Normalfall nur in derjenigen Richtung anlaufen kann, in der das bremsende Reluktanzmoment kleiner ist als das elektromagnetische Antriebsmoment, das durch diesen vorgegebenen Wert verursacht wird, dass aber der Motor nicht in der Gegenrichtung starten kann, in welcher das bremsende Reluktanzmoment größer ist als dieses elektromagnetische Drehmoment. Sollte aber der Motor trotzdem in der nicht gewünschten Richtung starten, was bei einem Lüfter z.B. durch Windstöße verursacht werden kann, die das Lüfterrad kurzzeitig antreiben, so wird das durch die Erfassung der Drehrichtung bemerkt, denn diese stellt fest, ob sich der Motor in der gewünschten Drehrichtung dreht, und falls das nicht der Fall ist, können Gegenmaßnahmen getroffen werden, um den Anlauf zu wiederholen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    ein Schaltbild eines Motors zur Durchführung eines erfindungsgemäßen Verfahrens,

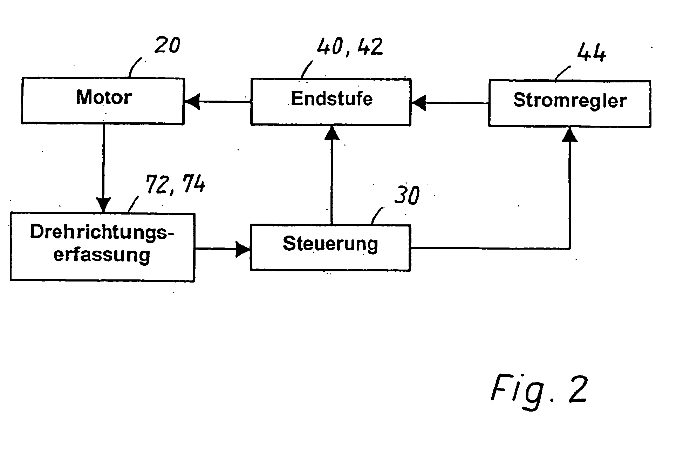

Fig. 2    ein Übersichtsschema zur Erläuterung eines erfindungsgemäßen Verfahrens,

Fig. 3    eine Darstellung der Drehmomente, die bei einem Motor nach der Erfindung im Betrieb auftreten, wenn sich dieser Motor in der gewünschten Drehrichtung dreht,

Fig. 4    eine Darstellung analog Fig. 3, wobei aber die Momente für den Fall dargestellt sind, dass sich der Rotor nicht in der gewünschten Drehrichtung dreht,

Fig. 5    ein Flussdiagramm zur Erläuterung eines bevorzugten Verfahrensablaufs,

Fig. 6    eine Darstellung der Ströme, wie sie beim Start auftreten können,

Fig. 7    eine Darstellung analog Fig. 6, bei welcher der Strom durch den Motor nach dem Start niedriger ist als während des Starts.

Fig. 8    die Form der induzierten Spannung für den Betrieb des Motors in seiner bevorzugten Drehrichtung,

Fig. 9    die Form der induzierten Spannung für den Betrieb des Motors entgegen seiner bevorzugten Drehrichtung,

Fig. 10    ein Prinzipschaltbild zur Erläuterung der Überlegungen, welche der sensorlosen Erfassung der Drehrichtung bei einem Motor dieser Bauart zugrunde liegen,

Fig. 11    eine schematische Darstellung der Erfassung der Drehrichtung für DIR = 1, und

Fig. 12    eine schematische Darstellung der Erfassung der Drehrichtung für DIR = 0.

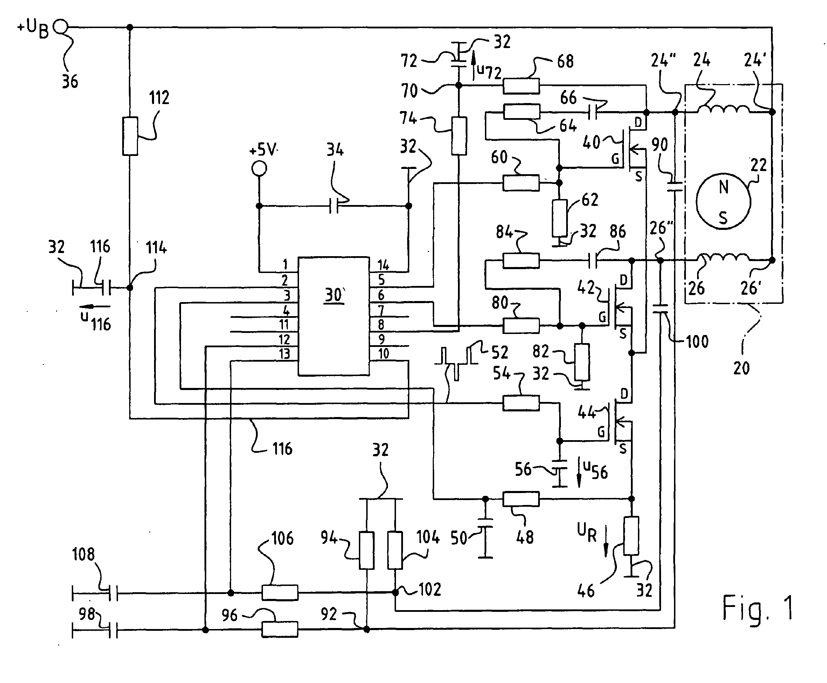

**Fig. 1** zeigt eine Schaltung zum Betreiben eines sog. zweipulsigen elektronisch kommutierten Motors 20, der einen permanentmagnetischen Rotor 22 und eine Statorwicklung hat, die hier mit zwei Phasen 24, 26 dargestellt ist, welche gewöhnlich über das Eisen des (nicht dargestellten) Stator-Blechpakets magnetisch miteinander gekoppelt sind. Ein solcher Motor wird deshalb zweipulsig genannt, weil in der Statorwicklung 24, 26 pro Rotordrehung von 360 $°_{el}$ zwei Statorstromimpulse fließen. Die Statorwicklung kann in manchen Fällen auch nur eine Phase haben, und dann fließt in dieser während einer Drehung von 180 $°_{el}$ ein Stromimpuls in der einen Richtung, und während der anschließenden Drehung von 180 $°_{el}$ ein Stromimpuls in der entgegengesetzten Richtung. Für diese Motoren, die in riesigen Stückzahlen hergestellt werden, gibt es viele Bauarten. Ein typisches Beispiel ist in der DE 2346380 C2 dargestellt. Solche Motoren werden häufig als sog. Klauenpolmotoren ausgebildet, wobei dann die Klauenpole so ausgebildet sind, dass sie ein von der Drehstellung abhängiges Reluktanzmoment erzeugen.
Die meisten Motoren diese Art verwenden zur Erfassung der Rotorstellung einen Hallsensor. Wenn es aber nötig wird, solche Motoren für einen vergrößerten Temperaturbereich herzustellen, oder wenn ein erheblicher Abstand zwischen dem ECM 20 und seiner elektronischen Steuerung vorhanden ist, muss die Rotorstellung nach dem so genannten Sensorless-Prinzip erfasst werden.
Fig. 1 betrifft eine Schaltung nach dem Sensorless-Prinzip, also ohne Hallsensor. Der Rotor 22 ist zweipolig dargestellt, könnte aber auch andere Polzahlen haben. Bei einem zweipoligen Rotor entspricht eine volle Umdrehung einer Drehung um 360 $°_{el}$, d. h. in diesem Fall gilt:

$$360°_{mech} = 360°_{el}. \qquad\qquad ...(1)$$

Bei einem vierpoligen Rotor gilt:

$$360°_{mech} = 720°_{el}.$$

Diese Zusammenhänge sind dem Fachmann des Elektromaschinenbaus geläufig.
Der Motor 20 wird gesteuert von einem Mikrocontroller (µC) 30, dessen Anschlüsse mit 1 bis 14 bezeichnet sind. Diese beziehen sich auf einen µC vom Typ PIC16F676. Der Anschluss 1 liegt an einer geregelten Spannung von +5 V, der Anschluss 14 an Masse 32. Dazwischen liegt ein Kondensator 34.

Der Motor 20 wird von einer Betriebsspannung $U_B$ mit Strom versorgt. Der positive Anschluss ist mit 36 bezeichnet, und an ihm sind die einen Anschlüsse 24', 26' der Phasen 24, 26 angeschlossen. Zwischen dem Anschluss 36 und Masse 32 liegt z. B. $U_B$ = 13 V, also die Spannung einer (nicht dargestellten) Fahrzeugbatterie.

Zur Steuerung des Stromes in der Phase 24 dient ein n-Kanal-MOSFET 40, zur Steuerung der Phase 26 ein n-Kanal-MOSFET 42. Dazu ist der Anschluss 24" der Phase 24 an den Drain-Anschluss D des Transistors 40 angeschlossen, und der Anschluss 26" der Phase 26 an den Anschluss D des Transistors 42. Die Source-Anschlüsse S beider Transistoren sind miteinander und mit dem Drain D eines n-Kanal-MOSFET 44 verbunden, der dazu dient, in den Phasen 24, 26 einen konstanten Gesamtstrom zu erzeugen. Die Source S des Transistors 44 ist über einen zur Strommessung dienenden Widerstand 46 mit Masse 32 verbunden. Die Spannung UR am Widerstand 46 wird über ein RC-Siebglied 48, 50 dem Eingang 3 des µC 30 zugeführt. Entsprechend der Höhe von uR liefert der µC an seinem Ausgang 2 ein Steuersignal 52, das den Arbeitspunkt des Transistors 44 so steuert, dass sich der gewünschte Konstantstrom ergibt, der durch das Programm des µC 30 einstellbar ist.

Preiswerte Mikrocontroller, wie man sie in Motoren verwendet, haben gewöhnlich keine Hardware zur Erzeugung eines PWM-Signals. Man müsste also ein solches Signal durch ein Programm generieren, was die Ressourcen eines solchen Mikrocontrollers weitgehend blockieren würde.

Deshalb wird hier der Kondensator 56 zunächst über den Widerstand 54 aufgeladen. Dadurch arbeitet der Transistor 44 so, dass sich der gewünschte Konstantstrom ergibt, und dieser ist folglich durch das Programm des µC 30 einstellbar. Wenn der Kondensator 56 geladen ist, wird der Anschluss 2 des µC 30 auf hochohmig umgeschaltet. Wenn sich der Kondensator 56 entlädt, wird seine Ladung "aufgefrischt". Dafür benötigt der µC 30 gewöhnlich nur einen Takt, also beim angegebenen Mikrocontroller 1 µs

Die Transistoren 40, 42 werden durch den Steuertransistor 44 im Source-Bereich jeweils derart angesteuert, dass der Strom durch die Phasen 24, 26 zumindest während der Kommutierung im Wesentlichen konstant ist. Hierzu werden die Transistoren 40, 42 als sog. Abschnürstromquellen betrieben. Wird z. B. der Transistor 40 leitend gesteuert, so wirkt der Steuertransistor 44 als Widerstand gegen Masse 32. Die Stromstärke durch die Phase 24, 26 und damit die Drehzahl des Motors 20 lässt sich also durch das Signal 52, und damit die Spannung $u_{56}$ am Kondensator 56, einstellen.

Durch den Steuertransistor 44 wird erreicht, dass bei den Transistoren 40 bzw. 42 die Drain-Source-Spannung UDS geändert wird, und damit wird auch die Höhe des Stroms durch die Phasen 24 bzw. 26 beeinflusst. Hierbei wird ggf. auch erreicht, dass die Transistoren 40, 42 im Abschnürbereich arbeiten. Alle Typen von Feldeffekttransistoren weisen einen solchen Abschnürbereich auf.

Wird der Steuertransistor 44 derart angesteuert, dass er einen hohen Widerstand und damit eine niedrige Leitfähigkeit aufweist, so steigt das Potenzial an der Source S des jeweils leitenden Endstufentransistors 40, 42. Dadurch fließt weniger Strom durch diesen Transistor, und er geht in den Abschnürbereich über.

Wird der Steuertransistor 44 derart angesteuert, dass er einen geringen Widerstand und damit eine hohe Leitfähigkeit hat, so ist das an der Source S des jeweils leitenden Transistors 40 oder 42 anliegende Potenzial gering. Die damit verbundene hohe Gate-Source-Spannung führt zu einer entsprechend hohen Stromstärke in den Phasen 24, 26.

Im Gegensatz zu einer üblichen Kommutierung wird so der Strom im Motor 20 im Wesentlichen konstant gehalten, wodurch sich ein sehr ruhiger Lauf des Motors 20 ergibt und der Start des Motors 20 gesteuert werden kann.

Der Transistor 40 wird vom Ausgang 5 des µC 30 gesteuert, der Transistor 42 vom Ausgang 6. Hierzu ist der Ausgang 5 über einen Widerstand 60 mit dem Gate G des Transistors 40 verbunden, das über einen Widerstand 62 mit Masse 32 und über die Serienschaltung eines Widerstands 64 und eines Kondensators 66 mit dem Drain D verbunden ist. Letzterer ist über einen Widerstand 68 mit einem Knotenpunkt 70 verbunden, der über einen Kondensator 72 mit Masse 32 und über einen Widerstand 74 mit dem Anschluss 8 des µC 30 verbunden ist (Die Anschlüsse 4, 7, 9 und 11 des µC 30 sind nicht beschaltet).

Am Kondensator 72 tritt im Betrieb eine Spannung u72 auf, die zur Bestimmung der Drehrichtung des Rotors 22 verwendet wird. Dies wird nachfolgend beschrieben.

Der Ausgang 6 ist über einen Widerstand 80 mit dem Gate G des Transistors 42 verbunden, der über einen Widerstand 82 mit Masse 32 und über die Serienschaltung eines Widerstands 84 und eines Kondensators 86 mit dem Drain D verbunden ist.

Der Anschluss 24" ist über einen Kondensator 90 mit einem Knotenpunkt 92 verbunden, der über einen Widerstand 94 mit Masse 32 und über einen Widerstand 96 mit dem Eingang 12 des µC 30 verbunden ist, an den auch ein Siebkondensator 98 angeschlossen ist.

Der Anschluss 26" ist über einen Kondensator 100 mit einem Knotenpunkt 102 verbunden, der über einen Widerstand 104 mit Masse 32 und über einen Widerstand 106 mit dem Eingang 13 des µC 30 verbunden ist, an den auch ein Siebkondensator 108 angeschlossen ist.

Die Elemente 90 bis 108 dienen dazu, den Zeitpunkt, an dem während einer Rotordrehung der Strom durch die Phase 24 bzw. 26 eingeschaltet wird, mit zunehmender Drehzahl in Richtung früh zu verschieben, was man gewöhnlich, in Anlehnung an die Terminologie eines Benzinmotors, als "Zündwinkelverschiebung" bezeichnet, obwohl naturgemäß bei einem Elektromotor 20 nichts gezündet wird.

Mit dem Anschluss 36 ist über einen Widerstand 112 ein Knotenpunkt 114 verbunden, der über einen Kondensator 116 mit Masse 32 verbunden ist. Am Kondensator 116 tritt im Betrieb eine Spannung U116 auf, die abhängig von der Spannung am Anschluss 36 ist, und diese Spannung wird über eine Leitung 118 dem Eingang 10 des µC 30 zugeführt und dient dazu, Störspannungen rechnerisch zu eliminieren, die in der Spannung U72 enthalten sind. Dies wird nachfolgend beschrieben.

**Bevorzugte Werte der Bauelemente in Fig. 1** (für $U_B$ = 13 V):

| | |
|---|---|
| Transistoren 40, 42, 44 | ILRL3410 |
| C72, 116 | 2 nF |
| C50, 66, 86, 98, 108 | 1 nF |
| C34, 56 | 100 nF |
| $R_{62}$, 68, 82, 94, 96, 104, 106, 112 | 100 kΩ |
| R48, 54, 60, 80 | 10 kΩ |
| R74 | 0 Ω |
| R46 | 1,5 Ω |
| R64, 84 | 1 kΩ |

Der Motor 20 hat eine Drehrichtungserfassung 72, 74, mit der festgestellt werden kann, ob sich der Motor nach einem Anlaufversuch in der gewünschten Drehrichtung dreht. Ferner hat der Motor 20 eine Steuerung, nämlich den µC 30, mit dem der Stromregler 44 auf einen gewünschten Startstrom eingestellt werden kann, wobei dieser Stromregler 44 auf die Endstufen 40, 42 wirkt, wie vorstehend beschrieben, so dass der Motor 20 mit einem konstanten Startstrom betrieben werden kann, der genau entsprechend den Erfordernissen dosiert ist.

Die Drehrichtungserfassung 72, 74 ermöglicht es, einen Start in der falschen Drehrichtung zu erkennen und an die Steuerung 30 zu melden. Diese stoppt dann den Motor 20 und macht einen neuen Startversuch in der richtigen Richtung.

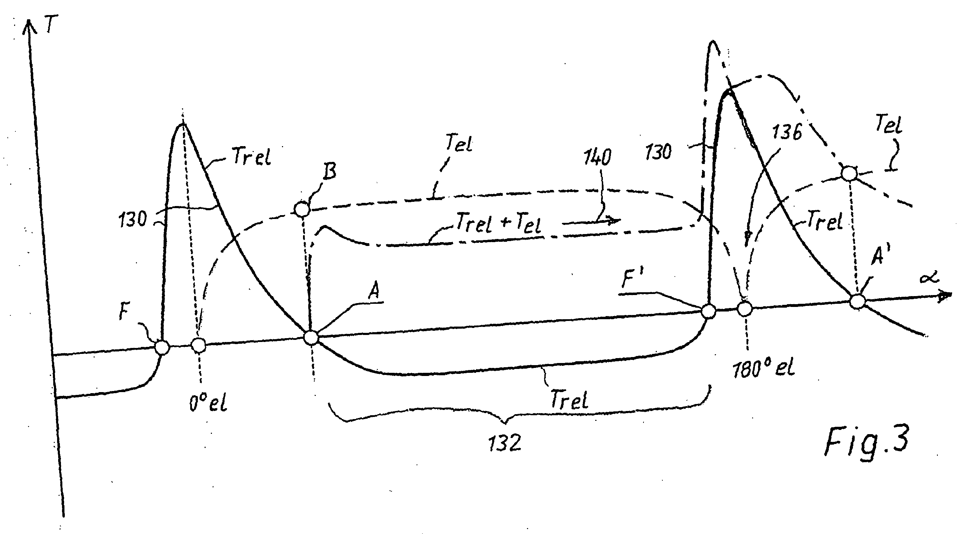

**Fig. 3** zeigt über dem Drehwinkel alpha des Rotors 22 die Drehmomente T, die bei einem zweipulsigen Motor 20 beim Start auftreten.

Ein solcher Motor hat ein Reluktanzmoment $T_{rel}$, das in den Motor sozusagen "hinein konstruiert" und deshalb invariant ist. Dieses Drehmoment hat für die Drehrichtung, welche in Fig. 3 dargestellt ist, einen antreibenden, positiven Teil 130, der relativ kurz ist und eine hohe Amplitude hat. Ferner hat $T_{rel}$ einen negativen, also bremsenden Abschnitt 132, der eine niedrige Amplitude hat, aber länger dauert.

Wenn der Rotor 22 von außen angetrieben wird, so wird er zwischen den Stellen A und F' durch den negativen Zweig 132 des Reluktanzmoments $T_{rel}$ gebremst. Zwischen den Stellen F' und A' wird $T_{rel}$ positiv und unterstützt dabei die Drehung des Rotors 22 in der gewünschten Drehrichtung.

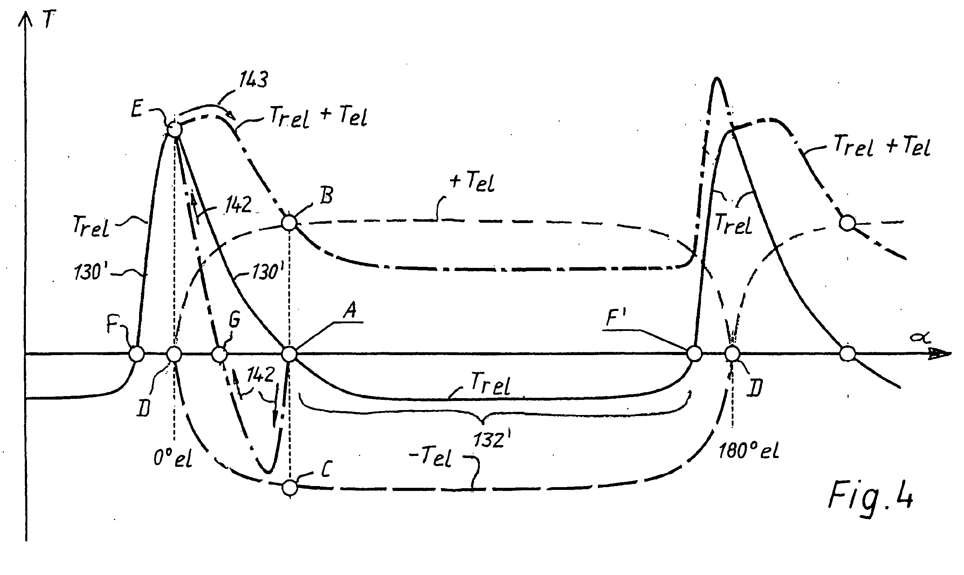

Wird der Rotor 22 in der entgegengesetzten Richtung angetrieben, wie das in **Fig.** 4 dargestellt ist, also in Fig. 4 von A nach F, so wirkt der Zweig 130' von $T_{rel}$ zwischen den Punkten A und F stark bremsend, und der Zweig 132' wirkt antreibend. Die Verhältnisse sind also umgekehrt wie bei Fig. 3.

In Fig. 3 ist auch das elektromagnetische Drehmoment $T_{el}$ eingetragen, das bei der Drehrichtung gemäß Fig. 3 in der dargestellten Weise antreibend wirksam ist und dadurch den negativen Zweig 132 von $T_{rel}$ überwindet. Das elektromagnetische Drehmoment $T_{el}$ hat wie dargestellt Lücken 136, und diese werden durch den positiven Zweig 130 von $T_{rel}$ überbrückt, wie man Fig. 3 direkt entnehmen kann. Das resultierende Drehmoment $T_{rel} + T_{el}$ ist durchgehend positiv und bewirkt einen kontinuierlichen Antrieb in der Vorzugsrichtung des Motors 20, also mit DIR = 1.

Fig. 4 zeigt das elektromagnetische Drehmoment $-T_{el}$ für den Lauf in umgekehrter Drehrichtung. In diesem Fall wird es durch den Zweig 132' von Trel unterstützt, während ihm der - hier bremsende - Zweig 130' von $T_{rel}$ entgegen wirkt.

Ein solcher Motor 20 hat also eine Vorzugsrichtung, die in Fig. 3 dargestellt ist, wobei sich die Drehmomente $T_{el}$ und $T_{rel}$ sehr gut ergänzen, und er hat eine "schlechte" Drehrichtung gemäß Fig. 4, bei der die Drehmomente $T_{el}$ und $T_{rel}$ sehr schlecht zueinander passen, weshalb der Anlauf in dieser Drehrichtung schwierig ist. Gewöhnlich wird ein Anlauf in dieser Drehrichtung nicht verlangt.

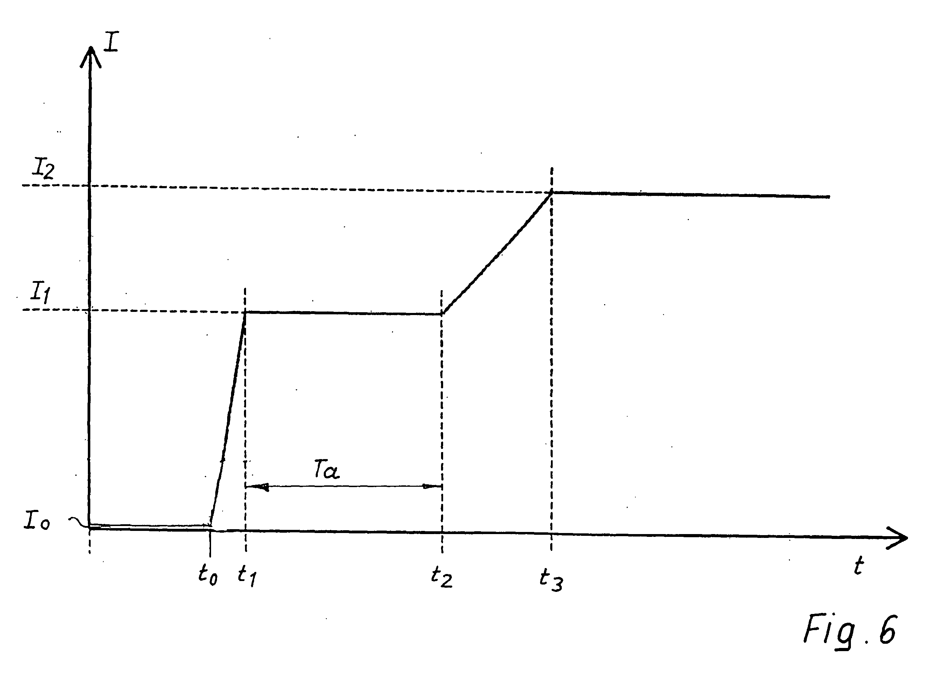

Gemäß **Fig. 6** wird zum Start in der in Fig. 3 dargestellten Drehrichtung der Konstantstrom I im Motor auf einen Wert $I_1$ eingestellt, wobei der Anstieg von dem Strom I = 0 auf I = $I_1$ im Wesentlichen monoton und innerhalb einer kurzen Zeit erfolgt.

Beim Start befindet sich der Rotor 22 gewöhnlich in der Stellung A, weil dort $T_{rel}$ den Wert 0 hat und dies eine stabile Ruheposition des Rotors 22 ist.

Startet der Rotor 22 aus dieser Ruheposition A in der richtigen Drehrichtung, so steigt das elektromagnetische Drehmoment $T_{el}$, das bisher den Wert 0 hatte, zur Stelle B (Fig. 3) an, wird größer als der bremsende Zweig 132 von $T_{rel}$, und treibt den Rotor 22 entgegen dem bremsenden Zweig 132 von $T_{rel}$ an, so dass sich der Rotor 22 in Richtung des Pfeiles 140 dreht.

An sich wären beim Anlauf in der Vorzugsrichtung zusätzliche Sicherungsmaßnahmen überflüssig, doch werden diese Maßnahmen bevorzugt in beiden Drehrichtungen durchgeführt, um die Struktur des verwendeten Programms einfach zu halten.

Gemäß Fig. 6 wird der Strom $I_1$ während einer Zeit Ta aufrechterhalten, nämlich zwischen den Zeitpunkten t1 und t2, wobei Ta z.B. zwischen 0,5 und 2 Sekunden liegen kann, je nach Größe des Motors.

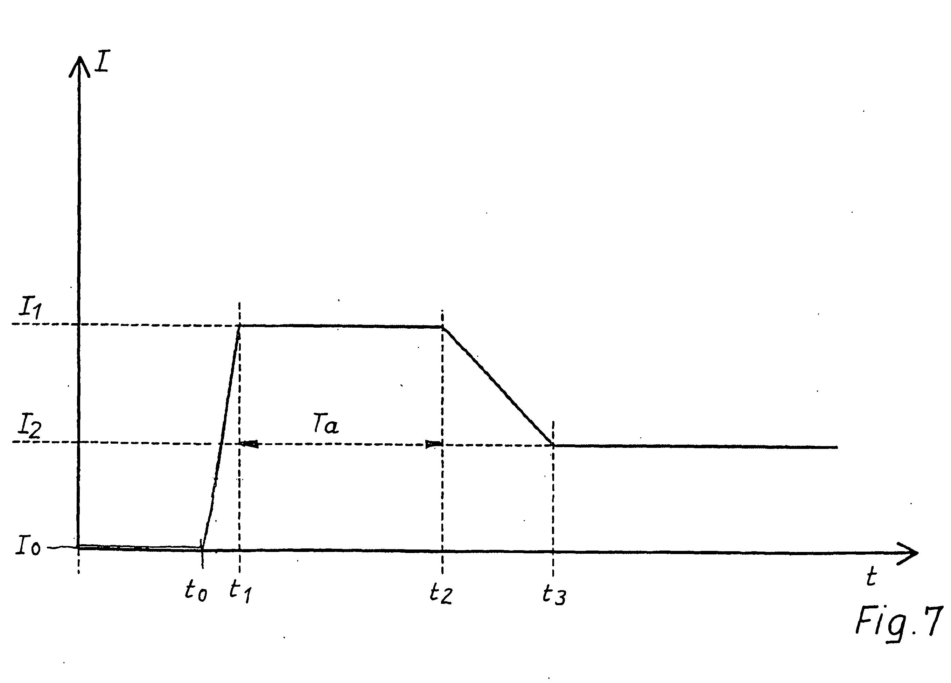

Wenn dann der Motor 20 normal läuft, wird durch den Stromregler 44 der Strom I auf einen Wert $I_2$ eingestellt, welcher der gewünschten Drehzahl des Motors 20 entspricht. Fig. 6 zeigt den Fall, wo $I_2$ größer ist als $I_1$. Fig. 7 zeigt den umgekehrten Fall, wo $I_2$ kleiner ist als $I_1$. Man erkennt hieraus, dass $I_1$ und die Zeit Ta entsprechend den Erfordernissen des Motorstarts ausgewählt werden sollten.

Fig. 4 zeigt, was geschieht, wenn der Rotor 22 in der falschen Richtung startet. In diesem Fall erzeugt der Strom $I_1$ ein Drehmoment -Tel in der entgegengesetzten Richtung, weshalb dieses elektromagnetische Drehmoment -$T_{el}$ den Rotor 22 in Richtung der Pfeile 142 antreibt, wobei -Tel dem Betrag nach abnimmt. Ein resultierendes Gesamtmoment $T_{el} + T_{rel}$ ist zunächst negativ und verursacht eine kleine Drehung entgegen der Vorzugsrichtung. Nach dem Durchlaufen eines Punktes G wird das resultierende Gesamtmoment $T_{el} + T_{rel}$ positiv, so dass die Drehung am Punkt E zum Stillstand kommt.

Dabei sind Form und Amplitude von -$T_{el}$ durch den Konstantstrom $I_1$ bestimmt. Dieser wird so festgelegt, dass das Drehmoment -$T_{el}$ den - in diesem Fall bremsenden - Zweig 130' des Reluktanzmoments Trel bei Anlauf in der falschen Drehrichtung nicht überwinden kann, d.h. der Rotor 22 startet von einer Stelle C und gelangt zu einer Stelle D. An der Stelle D erfolgt eine Kommutierung, d.h. der Strom wird entweder von der Phase 24 auf die Phase 26 umgeschaltet oder umgekehrt. Dadurch wird die Richtung des elektromagnetischen Drehmoments auf + Tel umgeschaltet, und es entsteht ein positives Gesamtmoment ($T_{el} + T_{rel}$), welches eine Drehung in der Vorzugsrichtung bewirkt, was durch einen Pfeil 143 angedeutet ist.

Hierzu enthält das Programm des μC 30 die entsprechenden Routinen.

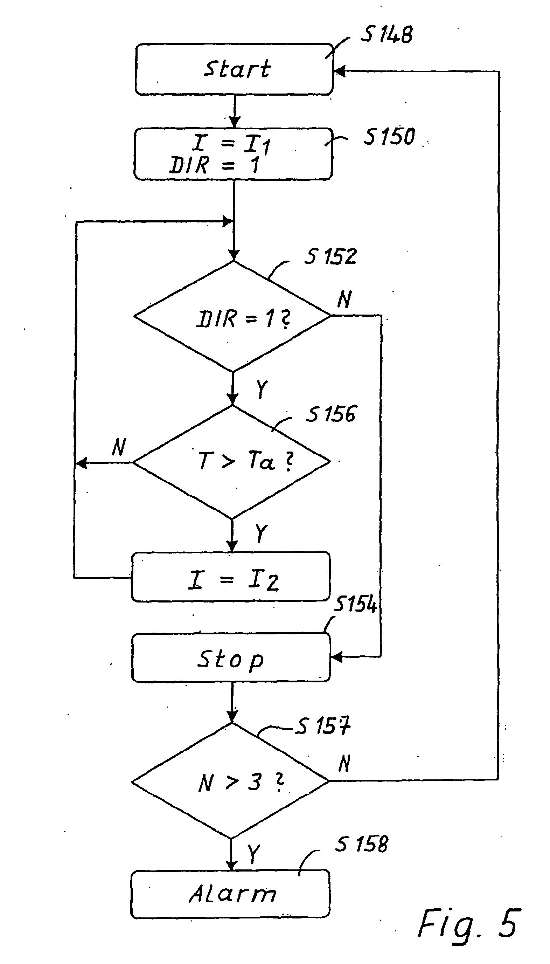

**Fig. 5** zeigt das zugehörige Flussdiagramm. Dieses startet bei S148. Bei S150 wird die Drehrichtung auf DIR = 1 gesetzt, und der Stromregler 44 wird auf I = $I_1$ eingestellt. Auch kann die Form und Zeitdauer der Anstiegsrampe zwischen den Werten I = 0 und I = $I_1$ eingestellt werden.

Bei S152 wird geprüft, ob sich tatsächlich der Rotor 22 mit der Drehrichtung DIR = 1 dreht, d.h. ob ein entsprechendes Drehrichtungssignal vorliegt. Falls Nein, geht das Programm zu S154, und der Motor 20 wird abgeschaltet.

Falls in S152 DIR = 1 ist, wird anschließend in S156 geprüft, ob die Zeit Ta, z.B. eine Sekunde, bereits abgelaufen ist. Falls Nein, wird die Bestromung mit $I_1$ fortgesetzt. Falls die Zeit Ta abgelaufen ist, wird der Konstantstrom auf $I_2$ umgeschaltet, vgl. **Fig. 6** und **Fig. 7**.

Im Anschluss an S154 geht das Programm zu S157, wo die Zahl N der Startversuche gezählt wird. Falls diese größer als 3 ist, geht das Programm zu S158 und erzeugt einen Alarm. Falls in S157 N kleiner als 4 ist, erfolgt ein neuer Startversuch in der richtigen Drehrichtung.

**Ermittlung der Drehrichtung**

Die Ermittlung der Drehrichtung erfolgt dadurch, dass man die in der Statorwicklung im Betrieb induzierten Spannungen erfasst und analysiert. Dies ist deshalb möglich, weil diese Spannungen je nach Drehrichtung bei einem Motor des eingangs genannten Typs unterschiedliche Formen haben. Hieraus lässt sich die gewünschte Information über die Drehrichtung des Motors relativ zum Reluktanzmoment entnehmen.

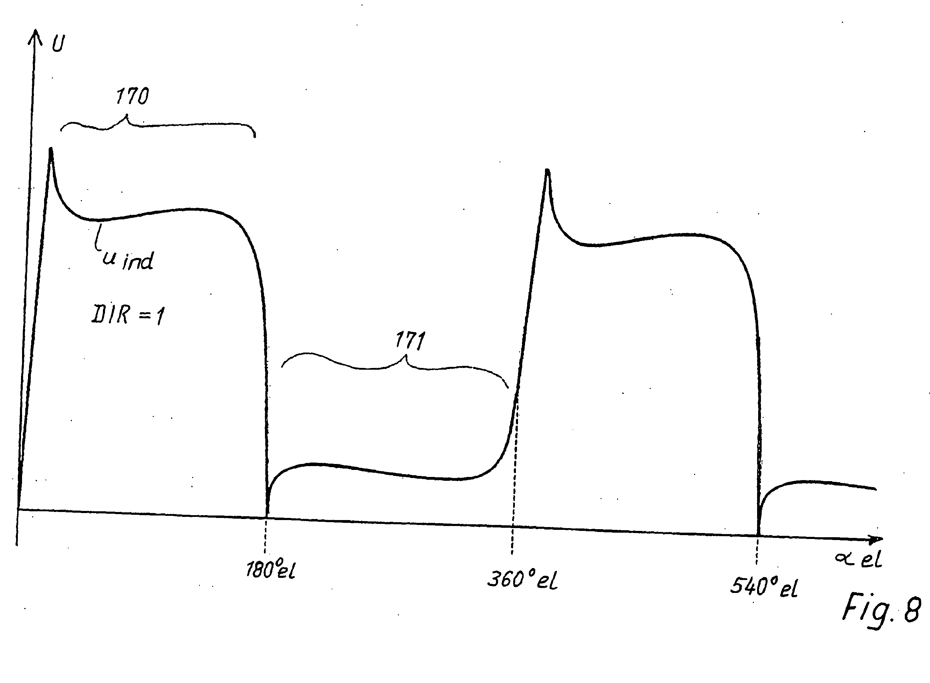

**Fig. 8** zeigt die Form der induzierten Spannung $u_{ind}$ für den Betrieb des Motors 20 in seiner bevorzugten Drehrichtung (DIR = 1). Man erkennt, dass die induzierte Spannung $u_{ind}$ über einen größeren Drehwinkelbereich 170 eine ansteigende Tendenz hat, wenn die betreffende Phase stromlos ist. In dem Drehwinkelbereich 171, in dem ein Strom in der betreffenden Phase fließt, ist die Spannung niedriger und hat eine abfallende Tendenz.

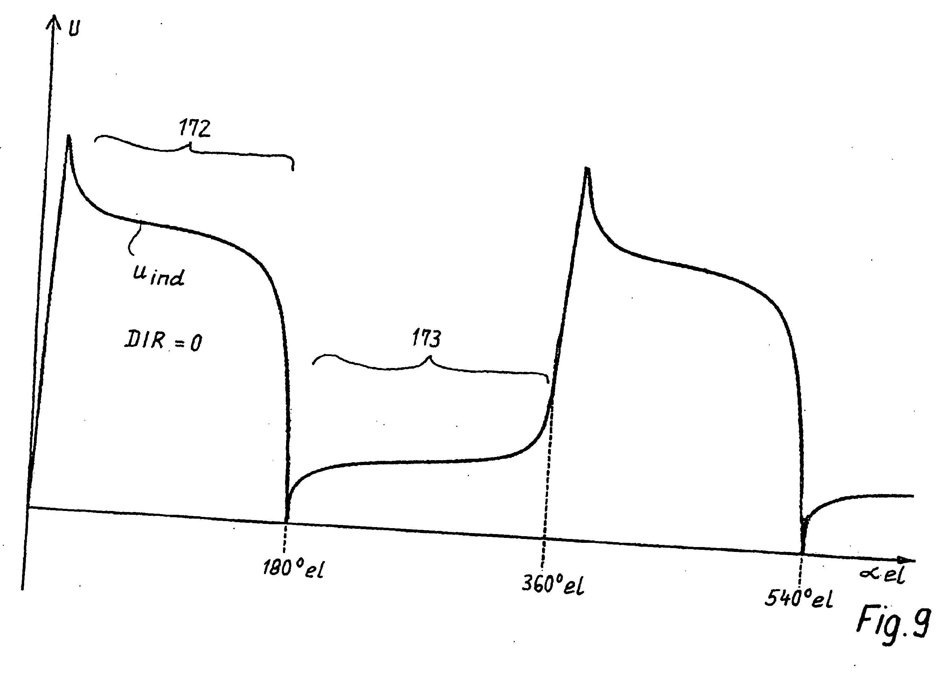

**Fig. 9** zeigt zum Vergleich die induzierte Spannung $u_{ind}$ für den Betrieb des Motors 20 entgegen seiner bevorzugten Drehrichtung (also für DIR = 0). Man erkennt, dass die induzierte Spannung über einen größeren Drehwinkelbereich 172 abfällt, wenn die betreffende Phase stromlos ist. In dem Drehwinkelbereich 173, in dem bei DIR = 0 ein Strom in der betreffenden Phase fließt, ist die Spannung niedriger und hat eine ansteigende Tendenz.

Es ist darauf hinzuweisen, dass die Fig. 8 und 9 Schemadarstellungen sind, d.h. in der Realität kann der Anstieg im Bereich 170 bzw. 173 und der Abfall im Bereich 171 bzw. 172 weniger stark sein. Aus didaktischen Gründen sind die Unterschiede übertrieben dargestellt.

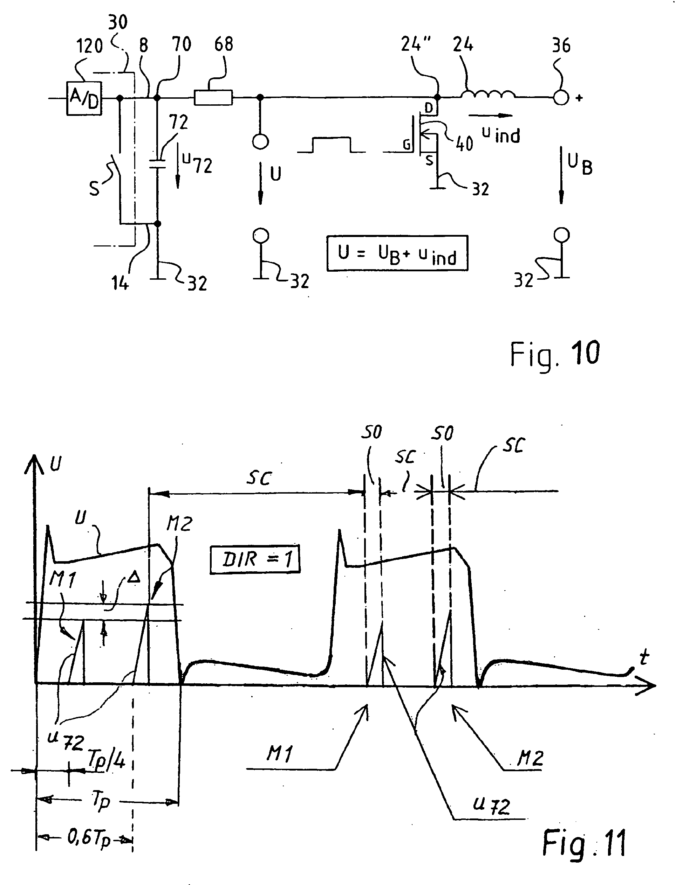

**Fig. 10** zeigt einen Auszug aus Fig. 1, nämlich die wesentlichen Elemente der Messschaltung für die Erfassung der Drehrichtung.

Das Potenzial am Punkt 24" der Phase 24 wird gemessen, wenn der Transistor 40 nicht leitend ist, also wenn der Transistor 42 Strom führt. In diesem Fall liegt am Punkt 36 die Betriebsspannung U$_B$, und zu dieser addiert sich die induzierte Spannung u$_{ind}$ an der stromlosen Phase 24, so dass für das Potenzial U am Punkt 24" gilt:

$$U = U_B + u_{ind} \qquad \ldots(2)$$

Dieses Potenzial wird über den Widerstand 68 dem Kondensator 72 zugeführt.

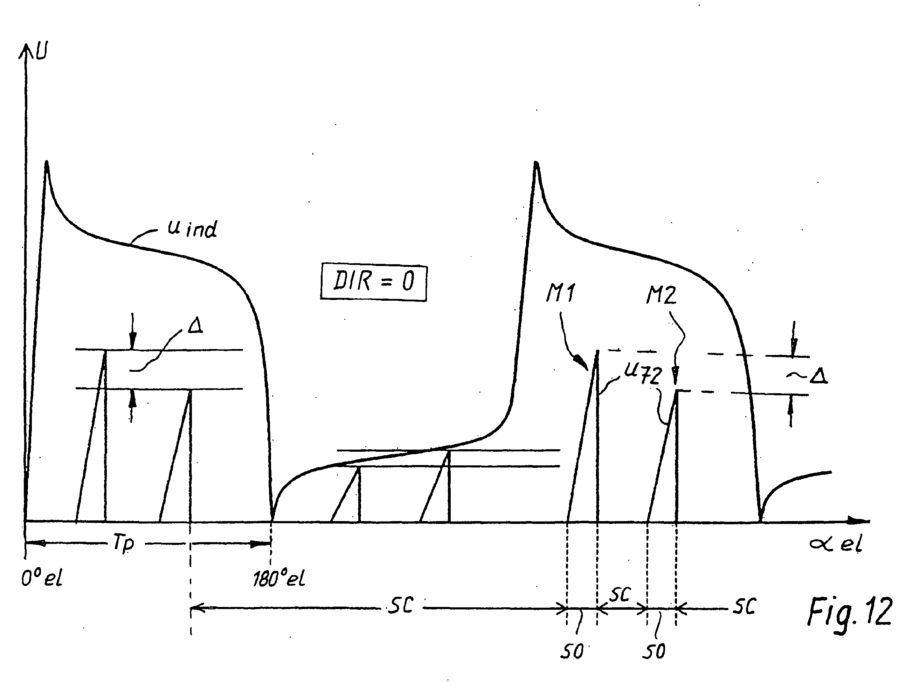

Parallel zum Kondensator 72 liegt ein Schalter S im µC 30 und dieser Schalter S ist die meiste Zeit geschlossen, in Fig. 11 und 12 symbolisiert durch "SC" (= switch closed), und hält dabei den Kondensator 72 entladen, so dass die Spannung u72 während dieser Zeit den Wert 0 hat.

Wenn eine Messung M durchgeführt werden soll, wird der Schalter S durch das Programm des µC 30 geöffnet, so dass die Spannung u$_{72}$ am Kondensator 72 auf einen Wert ansteigt, der etwa der augenblicklichen Spannung U entspricht. Diese Spannung am Kondensator 72 wird in einem A/D-Wandler 120 in einen digitalen Wert konvertiert und zwischengespeichert.

Bezeichnet man den Abstand zwischen zwei Kommutierungen mit Tp, so geschieht das einmal z.B. nach Tp/4 und zu diesem Zeitpunkt wird eine erste Messung M1 ausgeführt, und ein erster Wert u_72.1 wird gespeichert.

Anschließend wird nach einer vorgegebenen Zeitdauer, z. B. nach 0,5...0,6 Tp eine zweite Messung M2 durchgeführt, und der dort gemessene zweite Wert u_72.2 wird ebenfalls gespeichert.

Danach wird die Differenz Δ gebildet, also

$$\Delta = u\_72.2 - u\_72.1 \qquad \ldots(3)$$

und das Vorzeichen der Differenz Δ wird bestimmt.

Bei **Fig. 11** ergibt sich ein positives Vorzeichen der Differenz Δ, und bei **Fig. 12** ergibt sich ein negatives Vorzeichen, weil bei der Drehrichtung gemäß Fig. 12 die Spannung U in der stromlosen Phase eine fallende Charakteristik gemäß Fig. 9 hat, während sie bei Fig. 11 eine steigende Charakteristik gemäß Fig. 8 hat. Dies ist eine Eigenschaft solcher zweipulsiger Motoren, die im vorliegenden Fall für die Erfassung der Drehrichtung ausgenutzt wird.

Hierbei ist sehr vorteilhaft, dass durch den Steuertransistor 44 der Strom im Widerstand 46 konstant gehalten wird, d. h die im Augenblick stromführende Phase 26 hat keinen wesentlichen Einfluss auf die Spannung u$_{ind}$ an der Phase 24, an der die Messungen stattfinden, weil der konstante Strom in der Phase 26 keine transformatorische Kopplung auf die Phase 24 bewirkt.

Da sich der Motor 20 bei richtigem Anlauf mit DIR = 1 dreht, erhält man gemäß Fig. 11 ein positives Δ als Quittung für einen richtigen Anlauf.

Dreht sich nach dem Start der Motor 20 in der Richtung DIR = 0, so erhält man gemäß Fig. 12 ein negatives Δ, und der Start wird abgebrochen, und ein neuer Startversuch wird gemacht. Auf diese Weise wird sichergestellt, dass der Motor in jedem Fall in der richtigen Drehrichtung startet.

Die absoluten Messwerte, die man am bestromten Strang 24 oder 26 misst, werden zusätzlich dafür verwendet, einen Konstantstrom zu erzeugen. Falls uR unter 1 V fällt, wird es schwierig, einen Konstantstrom aufrecht zu erhalten.

Sehr vorteilhaft bei der vorliegenden Erfindung ist, dass kein Hallsensor erforderlich ist und trotzdem ein sicherer Anlauf in der gewünschten Drehrichtung möglich ist. Man kann so ECMs mit einem größeren Temperaturbereich herstellen, und man kann bei einem solchen ECM den Motor räumlich von seiner Steuerung trennen.

Naturgemäß sind im Rahmen der vorliegenden Erfindung vielfache Abwandlungen und Modifikationen möglich.

**Patentansprüche**

1. Verfahren zum Starten eines elektronisch kommutierten Motors in einer bevorzugten Drehrichtung, welcher Motor einen Stator mit einer Statorwicklungsanordnung (24, 26) und einen permanentmagnetischen Rotor (22) aufweist, welch letzterer bei seiner Drehung durch Interaktion mit dem Stator ein Reluktanz-Hilfsmoment (T$_{rel}$) erzeugt, das antreibende Abschnitte (130) und bremsende Abschnitte (132) aufweist, und mit einer Vorrichtung zum Steuern des Stromes in der Statorwicklungsanordnung (24, 26), um ein elektromagnetisches Drehmoment (Tel) zu erzeugen, das pro Rotordrehung von 360° el. zwei antreibende Abschnitte aufweist, wobei benachbarte antreibende Abschnitte jeweils durch eine Lücke (136) voneinander getrennt sind, und bei einer Drehung des Rotors (22) in dessen bevorzugter Drehrichtung (DIR=1) jeweils ein antreibender Abschnitt (130) des Reluktanzmoments ($T_{rel}$) in der Lücke (136) zwischen zwei antreibenden Abschnitten des elektromagnetischen Drehmoment (Tel) wirksam ist, mit folgenden Schritten:

a) Durch Begrenzung des Motorstroms auf einen vorgegebenen Wert ($I_1$) wird beim Start die elektrische Energiezufuhr zum Motor in der Weise kontrolliert, dass der Motor bei einem Start in der zur bevorzugten Drehrichtung entgegengesetzten Richtung (Fig. 4: 142) einen in dieser entgegengesetzten Drehrichtung wirksamen bremsenden Abschnitt (Fig. 4: 130') des Reluktanz-Hilfsmoments ($T_{rel}$) nicht überwinden kann;

b) es wird überwacht, ob sich der Rotor (22) in der gewünschten Drehrichtung dreht.

2. Verfahren nach Anspruch 1, bei welchem dann, wenn bei der Überwachung festgestellt wird, dass sich der Rotor (22) nicht in der gewünschten Drehrichtung (DIR = 1) dreht, der Motor gestoppt und ein neuer Startversuch unternommen wird.

3. Verfahren nach Anspruch 1 oder 2, bei welchem der Motorstrom beim Start im wesentlichen monoton auf den für den Anlauf gewählten vorgegebenen Wert ($I_1$) erhöht wird.

4. Verfahren nach einem der vorhergehenden Ansprüche, bei welchem der vorgegebene Wert ($I_1$) des Stroms während einer vorgegebenen Zeitspanne (Ta) aufrecht erhalten wird.

5. Verfahren nach einem der vorhergehenden Ansprüche, bei welchem der Wert des konstanten Stromes nach dem Start auf einen anderen konstanten Wert ($I_2$) verändert wird (Fig. 6, Fig. 7).

6. Elektromotor, welcher einen Stator mit einer Statorwicklungsanordnung (24, 26) und einen permanentmagnetischen Rotor (22) aufweist, der bei seiner Drehung durch Interaktion mit dem Stator ein Reluktanz-Hilfsmoment ($T_{rel}$) erzeugt, das antreibende Abschnitte (130) und bremsende Abschnitte (132) aufweist, und mit einer Vorrichtung zum Steuern des Stromes in der Statorwicklungsanordnung (24, 26), um ein elektromagnetisches Drehmoment zu erzeugen, das pro Rotordrehung von 360° el. zwei antreibende Abschnitte aufweist, welche durch eine Lücke voneinander getrennt sind, und bei der Drehung des Rotors (22) in dessen bevorzugter Drehrichtung (DIR=1) jeweils ein antreibender Abschnitt (130) des Reluktanzmoments ($T_{rel}$) in der Lücke (136) zwischen zwei antreibenden Abschnitten des elektromagnetischen Drehmoments (Tel) wirksam ist, und mit einer Strombegrenzungsanordnung, bei welcher der Wert für die Strombegrenzung einstellbar ist, welcher Motor zur Ausführung folgender Schritte ausgebildet ist:

a) Mittels der Strombegrenzungsanordnung wird beim Start durch Begrenzen des Motorstroms auf einen vorgegebenen Wert ($I_1$) die Zufuhr von elektrischer Energie zur Statorwicklungsanordnung (24, 26) in der Weise kontrolliert, dass der Rotor bei einem Start in der zur bevorzugten Drehrichtung entgegengesetzten Drehrichtung einen in dieser entgegengesetzten Richtung wirksamen bremsenden Abschnitt (Fig. 4: 130') des Reluktanzmoments ($T_{rel}$) nicht überwinden kann;

b) es wird überwacht, ob sich der Rotor (22) in der gewünschten Drehrichtung dreht.

7. Motor nach Anspruch 6, welcher für die Strombegrenzung einen Mikrocontroller (30), eine Strommessvorrichtung (46) und einen Abschnür-Strombegrenzer (44) aufweist, und bei welchem der Strom-Grenzwert des Abschnür-Strombegrenzers durch ein Ausgangssignal (52) des Mikrocontrollers (30) steuerbar ist.

8. Motor nach Anspruch 7, bei welchem der Abschnür-Strombegrenzer einen MOSFET (44) aufweist, dessen Strom-Grenzwert von der Ladespannung ($u_{56}$) eines Kondensators (56) abhängig ist, dessen Ladung ihrerseits durch das Ausgangssignal (52) des Mikrocontrollers (30) beeinflussbar ist.

9. Motor nach einem der Ansprüche 6 bis 8, bei welchem ein $\mu$C (30) vorgesehen ist, welcher dazu ausgebildet ist, nach Ablauf einer vorgegebenen Zeit (Ta) nach dem Anlaufzeitpunkt (to) die Energiezufuhr zur Statorwicklungsanordnung (24, 26) auf einen anderen, konstanten Wert ($I_2$) umzuschalten (Fig. 6, Fig. 7).

**Claims**

1. Method for starting an electronically commutated motor in a preferred direction of rotation, which motor comprises a stator with a stator winding arrangement (24, 26) and a permanent magnet rotor (22) which, as it rotates, through interaction with the stator produces an auxiliary reluctance torque ($T_{rel}$) which comprises driving components (130) and braking components (132), and with a device for controlling the current in the stator winding arrangement (24, 26) in order to produce an electromagnetic torque ($T_{el}$) which for each rotation of the rotor of 360° el. comprises two driving components, wherein neighbouring driving components are in each case separated from one another by a gap (136), and when the rotor (22) is rotating in its preferred direction of rotation (DIR=1) in each case one driving component (130) of the reluctance torque ($T_{rel}$) is active in the gap (136) between two driving components of the electromagnetic torque ($T_{el}$), with the following steps:

   a) when starting, the supply of electrical energy to the motor is controlled by limiting the motor current to a predetermined value ($I_1$) such that when starting in the opposite direction to the preferred direction of rotation (fig. 4: 142) the motor cannot overcome a braking component (fig. 4: 130') of the auxiliary reluctance torque ($T_{rel}$) acting in this opposite direction of rotation;
   b) monitoring is carried out to see whether the rotor (22) is rotating in the desired direction of rotation.

2. Method according to claim 1, in which, when it is found during the monitoring that the rotor (22) is not rotating in the desired direction of rotation (DIR=1), the motor is stopped and a new attempt at starting is made.

3. Method according to claim 1 or 2, in which when starting, the motor current is increased essentially monotonicly to the predetermined value ($I_1$) selected for starting.

4. Method according to one of the preceding claims, in which the predetermined value ($I_1$) of the current is maintained during a predetermined period of time ($T_a$).

5. Method according to one of the preceding claims, in which the value of the constant current is changed after starting to another constant value ($I_2$) (fig. 6, fig. 7).

6. Electric motor which comprises a stator with a stator winding arrangement (24, 26) and a permanent magnet rotor (22) which, as it rotates, through interaction with the stator produces an auxiliary reluctance torque ($T_{rel}$) which comprises driving components (130) and braking components (132), and with a device for controlling the current in the stator winding arrangement (24, 26) in order to produce an electromagnetic torque which for each rotation of the rotor of 360° el. comprises two driving components which are separated from one another by a gap, and when the rotor (22) is rotating in its preferred direction of rotation (DIR=1) in each case one driving component (130) of the reluctance torque ($T_{rel}$) is active in the gap (136) between two driving components of the electromagnetic torque ($T_{el}$), and with a current limiting arrangement with which the current limit value is adjustable, which motor is designed to execute the following steps:

   a) when starting, the supply of electrical energy to the stator winding arrangement (24, 26) is controlled by means of the current limiting arrangement by limiting the motor current to a predetermined value ($I_1$) such that when starting in the opposite direction of rotation to the preferred direction of rotation the rotor cannot overcome a braking component (fig. 4: 130') of the reluctance torque ($T_{rel}$) acting in this opposite direction;
   b) monitoring is carried out to see whether the rotor (22) is rotating in the desired direction of rotation.

7. Motor according to claim 6, which for limiting the current comprises a microcontroller (30), a current measuring device (46) and a cut-off current limiter (44), and in which the current limit value of the cut-off current limiter can be controlled by an output signal (52) of the microcontroller (30).

8. Motor according to claim 7, in which the cut-off current limiter comprises a MOSFET (44), the current limit value of which is dependent on the charging voltage ($u_{56}$) of a capacitor (56), the charge of which for its part can be influenced by the output signal (52) of the microcontroller (30).

9. Motor according to one of claims 6 to 8, in which a microcontroller (30) is provided which is designed to switch the energy supply for the stator winding arrangement (24, 26) to another constant value ($I_2$) after a predetermined time ($T_a$) has elapsed after the starting point (t0) (fig. 6, fig. 7).

**Revendications**

1. Procédé pour le démarrage d'un moteur à commutation électronique dans un sens de rotation préféré, lequel moteur présente un stator avec un agencement d'enroulements statoriques (24, 26) et un rotor à aimant permanent (22), ce dernier générant lors de sa rotation, par interaction avec le stator, un couple auxiliaire de réluctance (Trel) qui présente des sections d'entraînement (130) et des sections de freinage (132), et avec un dispositif de commande du courant dans l'agencement d'enroulements statoriques (24, 26) pour générer un couple électromagnétique (Tel) qui présente deux sections d'entraînement par tour de rotor de 360° él., des sections d'entraînement voisines étant chaque fois séparées l'une de l'autre par une lacune (136) et, lors d'une rotation du rotor (22) dans son sens de rotation préféré (DIR = 1), une section d'entraînement (130) du couple de réluctance (Trel) étant chaque fois active dans la lacune (136) entre deux sections d'entraînement du couple électromagnétique (Tel), présentant les étapes suivantes :

   a) on contrôle lors du démarrage, par limitation du courant de moteur à une valeur prédéfinie ($I_1$), l'amenée d'énergie électrique au moteur de manière qu'en cas de démarrage dans le sens opposé au sens de rotation préféré (fig. 4 : 142), le moteur ne puisse pas surmonter une section de freinage (fig. 4 : 130') du couple auxiliaire de réluctance (Trel) active dans ce sens de rotation opposé ;
   b) on surveille si le rotor (22) tourne dans le sens de rotation souhaité.

2. Procédé selon la revendication 1, dans lequel si, lors de la surveillance, on constate que le rotor (22) ne tourne pas dans le sens de rotation souhaité (DIR = 1), on arrête le moteur et on fait une nouvelle tentative de démarrage.

3. Procédé selon la revendication 1 ou 2, dans lequel, au démarrage, on augmente le courant de moteur de manière essentiellement monotone à la valeur prédéfinie ($I_1$) choisie pour le démarrage.

4. Procédé selon l'une des revendications précédentes, dans lequel on maintient la valeur prédéfinie ($I_1$) du courant pendant un intervalle de temps prédéfini (Ta).

5. Procédé selon l'une des revendications précédentes, dans lequel on modifie la valeur du courant constant à une autre valeur constante ($I_2$) après le démarrage (fig. 6, fig. 7).

6. Moteur électrique qui présente un stator avec un agencement d'enroulements statoriques (24, 26) et un rotor à aimant permanent (22) qui génère lors de sa rotation, par interaction avec le stator, un couple auxiliaire de réluctance (Trel) qui présente des sections d'entraînement (130) et des sections de freinage (132),
   et avec un dispositif de commande du courant dans l'agencement d'enroulements statoriques (24, 26) pour générer un couple électromagnétique (Tel) qui présente deux sections d'entraînement par tour de rotor de 360° él., lesquelles sont séparées l'une de l'autre par une lacune,
   et, lors de la rotation du rotor (22) dans son sens de rotation préféré (DIR = 1), une section d'entraînement (130) du couple de réluctance (Trel) est chaque fois active dans la lacune (136) entre deux sections d'entraînement du couple électromagnétique (Tel), et avec un dispositif de limitation de courant sur lequel la valeur de la limitation de courant est réglable,
   lequel moteur est conçu pour l'exécution des étapes suivantes :

   a) au moyen du dispositif de limitation de courant, on contrôle lors du démarrage, par limitation du courant de moteur à une valeur prédéfinie ($I_1$), l'amenée d'énergie électrique à l'agencement d'enroulements statoriques (24, 26) de manière qu'en cas de démarrage dans le sens opposé au sens de rotation préféré, le rotor ne puisse pas surmonter une section de freinage (fig. 4 : 130') du couple auxiliaire de réluctance (Trel) active dans ce sens de rotation opposé ;
   b) on surveille si le rotor (22) tourne dans le sens de rotation souhaité.

7. Moteur selon la revendication 6, lequel présente pour la limitation de courant un microcontrôleur (30), un dispositif de mesure de courant (46) et un limiteur de courant de pincement (44), et dans lequel la valeur limite de courant du limiteur de courant de pincement peut être commandée par un signal de sortie (52) du microcontrôleur (30).

8. Moteur selon la revendication 7, dans lequel le limiteur de courant de pincement présente un MOSFET (44) dont la valeur limite de courant dépend de la tension de charge ($u_{56}$) d'un condensateur (56) dont la charge est elle-même influençable par le signal de sortie (52) du microcontrôleur (30).

9. Moteur selon l'une des revendications 6 à 8, dans lequel il est prévu un $\mu$C (30) qui est conçu pour, à l'expiration d'un temps prédéfini (Ta) après l'instant de démarrage (t0), faire passer l'amenée d'énergie à l'agencement d'enroulements statoriques (24, 26) à une autre valeur constante ($I_2$) (fig. 6, fig. 7).

Fig. 1

EP 1 601 095 B1

12

Fig. 2

Fig.3

EP 1 601 095 B1

Fig.4

EP 1 601 095 B1

Fig. 5

Fig. 6

EP 1 601 095 B1

Fig.7

EP 1 601 095 B1

*Fig. 8*

EP 1 601 095 B1

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10235293 A1
- DE 2346380 A
- DE 4438569 A1
- EP 1104950 A2
- EP 1213829 A1
- DE 2346380 C2